# EUROPEAN PATENT APPLICATION

(11) **EP 4 726 481 A1**
(43) Date of publication of application: **15.04.2026**
(21) Application number: 24205151.4
(22) Date of filing: 08.10.2024
(51) Int. Cl.: G05B 17/02

(54) **CONTROL METHOD AND SYSTEM FOR CONTROLLING A PHYSICAL SYSTEM**

(71) Applicant: Hitachi Energy Ltd, 8050 Zürich (CH)
(72) Inventor: DAWIDOWSKI, Pawel, 32-010 Luczyce, Malopolskie (PL); SHIRSAT, Ashwin, Apex, 27502 (US); POLAND, Jan, 5415 Nussbaumen (CH); IU-OLDEEN, Joakim, 77143 Ludvika (SE); CHMIELOWIEC, Krzysztof, 32-089 Beblo (PL); BOMBA, Piotr, 26-400 Lipno (PL); MARINO, David, Montréal, H2R 2P1 (CA); GIUNTOLI, Marco, 64521 Groß-Gerau (DE); HESS, Martin, 31-201 Krakow (PL); BUGAJE, Al-Amin Bashir, Outremont, H2V 2V2 (CA)
(74) Representative: Vossius & Partner Patentanwälte Rechtsanwälte mbB

(57) **Abstract**

The present disclosure relates to a method for controlling a physical system, the method comprising: obtaining, from a storage medium , a model representing the physical system , and data related to the physical system, wherein the data is represented using a tree structure comprising at least one parent node and at least one child node associated with the at least one parent node; storing, in the at least one child node, at least one deviation obtained by performing at least one task based on the obtained model and data, wherein the at least one deviation stored in the at least one child node is a deviation in information from data stored in the at least one parent node; storing a respective identifier assigned to the at least one deviation; and performing at least one further task in response to determining that input data, required to perform the at least one further task, indicated by the respective identifier is available. The present disclosure further relates to a control system for controlling a physical system, the control system comprising at least one execution module, the at least one execution module comprising a transceiver module and a processor being configured to perform the method described herein.

## Description

The present disclosure relates to a method and a control system for controlling a physical system.

Transmission system operators require a set of supporting tools to operate the power system optimally and to react fast to anticipated scenarios as well as unforeseen fault events. A typical system to support power system operation consists of the following system calculation and analysis steps:
- Data acquisition - is a real time operation, where SCADA and other data sources are gathered for further analysis.
- Network model building- is the step where a model of a grid is prepared and validated.
- State estimation (SE) - calculate the missing state variables based on acquired data and network model. Example data that can be estimated from the data are the actual demand per each electrical node, missing / unavailable voltages, and the state of each breaker.
- Dispatch power flow (PF) - is a calculation of a system state in case of a change in one of the setpoints such as breaker position, generator power output or change in load. Power flow calculations allow operators to calculate a power system state before an action is applied in the power system to foresee what would be the outcome of the action to be executed.
- Optimal power flow (OPF) - calculate an optimal generator power and voltage setpoints to optimize cost of system losses and costs of power generation.
- Security assessment (SA) - is a calculation of n-1 set of system states for scenarios where one line or generator is switched off due to a fault or failure. For each of such system states a dispatch power flow is calculated to check if currents and voltages are within defined limits.
- Security constrained optimal power flow (SC-OPF) - calculate an optimal power flow which will not break any current or voltage limits in case of one of the n-1 anticipated scenarios of system state due to a fault or generator shutdown, wherein n denotes the

number of assets comprised in the power system and n-1 denotes a scenario wherein one of the assets malfunctions or is disabled.

Unit commitment is solved before each day to decide which generator will run at what hour. This is based on day ahead forecasts of demand and price of generations. Then during a day, a typical practice is to calculate SC-OPF for each hour ahead to finetune optimal power flow for the actual system state. In case of an event, such as a power system fault, the operator would like to repeat selected steps as quickly as possible to explore operation options. Also, the previously calculated SC-OPF is invalid, as there is a new base state for the power system. Therefore, it is important to have a new SC-OPF calculated as fast as possible.

There are two requirements for efficiently scheduling SA or SC-OPF calculations:
- The calculation execution should be as fast as possible. Typical expected calculation time of a single PF is of the order of 1s.
- The system model can be quite large of order of 50MB - 150MB for the biggest networks.

In the case of executing all calculations in a single machine, a shared memory can be utilized to hold a system model. Each sub-job can be executed using a separate thread leveraging multiple CPU cores available. A single process can schedule the order of execution and a set of system changes for defining n-1 scenarios to be calculated. This will limit the parallelization potential to the maximum number of CPU cores available on a single machine.

To distribute calculations over multiple workstations a system will require a scheduler and data synchronization to allow part of the jobs to be offloaded to other machines.

Furthermore, for SC-OPF it is often the case that the main problem is solved by an optimization solver, followed by SA calculations to validate that the security constraints are fulfilled. In the case that some of the security constraint limits are exceeded the main problem is altered and solved again. It is not known a priori how many iterations will be necessary to achieve a valid SC-OPF solution, therefore it is necessary to schedule sub-jobs to be executed in parallel dynamically, during the process.

Today the SC-OPF is typically solved within a single workstation, where parallel processes running several solver instances are utilized to solve SA sub-jobs. The main challenge is to have SC-OPF calculated within an hour, or for some of the operators the requirement can be more restrictive to have it within 15 minutes. To address the challenge with time constrain, one can prescreen n-1 scenarios to choose limited subset of the considered cases, thus limiting the number of considered n-1 cases accounted for security constraint.

The state of the art for calculation distribution is a map-reduce design pattern. The map step will prepare a list of jobs to be executed on a set of workers. When all jobs are finalized a reduce step will aggregate all results from all jobs. SA calculations fit into this pattern, as this step requires thousands of power flows to be calculated in parallel. However, this pattern does not address the SC-OPF case, where SA calculations might be repeated multiple times, each time for slightly adjusted generator setpoints.

Furthermore, this pattern assumes stateless workers which process jobs with no internal state stored. This will create an overhead per each job as the power system model with the actual setpoints will be required to be downloaded from a database, which can take more time than the actual calculations.

Thus, there is a need to improve a method and a control system for controlling a physical system.

### Summary of the invention

The present disclosure relates to a method for controlling a physical system, the method comprising: obtaining, from a storage medium, a model representing the physical system, and data related to the physical system, wherein the data is represented using a tree structure comprising at least one parent node and at least one child node associated with the at least one parent node; storing, in the at least one child node, at least one deviation obtained by performing at least one task based on the obtained model and data, wherein the at least one deviation stored in the at least one child node is a deviation in information from data stored in the at least one parent node; storing a respective identifier assigned to the at least one deviation; and performing at least one further task in response to determining that input data, required to perform the at least one further task, indicated by the respective identifier is available.

Various embodiments may preferably implement the following features:

Preferably, the method further comprises controlling the physical system based on further data obtained by performing the at least one further task.

Preferably, the method further comprises controlling an electrical power grid comprising a plurality of assets based on further data obtained by performing the at least one further task.

Preferably, the method further comprises controlling a power flow in an electrical power grid comprising a plurality of assets based on further data obtained by performing the at least one further task.

Preferably, the obtained model is unchangeable, more preferably by the at least one task and/or the at least one further task.

Preferably, the stored at least one deviation is unchangeable, more preferably by the at least one task and/or the at least one further task.

Preferably, the method further comprises pre-assigning a storage space in the storage medium for the input data, preferably prior to completing the at least one task.

Preferably, the method further comprises pre-assigning the respective identifier for the input data, preferably prior to completing the at least one task.

Preferably, the at least one task comprises a plurality of tasks.

Preferably, the method further comprises scheduling the plurality of tasks based on the pre-assigned respective identifier indicating unavailable input data of the input data.

Preferably, the at least one further task is a plurality of further tasks.

Preferably, the method further comprises scheduling the plurality of tasks based on at least one further task of the plurality of tasks requiring unavailable input data of the input data.

Preferably, the obtained model is stored at a local storage medium of an execution module.

Preferably, the stored model remains stored at the local storage medium of the execution module after performing the at least one task.

Preferably, the physical system is an electrical power grid comprising a plurality of assets.

Preferably, the at least one task comprises determining at least one parameter associated with the electrical power grid, more preferably the electrical power grid having at least one malfunctioning and/or disabled asset from the plurality of assets.

Preferably, the at least one parameter comprises or is a state estimation of the electrical power grid, more preferably the electrical power grid having at least one malfunctioning and/or disabled asset from the plurality of assets.

Preferably, the at least one task comprises determining a security assessment of the electrical power grid, more preferably the electrical power grid having at least one malfunctioning and/or disabled asset from the plurality of assets.

Preferably, the at least one task comprises a dispatch optimal power flow of the electrical power grid, more preferably the electrical power grid having at least one malfunctioning and/or disabled asset from the plurality of assets.

Preferably, the at least one task comprises determining a security constrained power flow of the electrical power grid, more preferably the electrical power grid having at least one malfunctioning and/or disabled asset from the plurality of assets.

Preferably, the at least one task comprises determining a unit commitment the electrical power grid, more preferably the electrical power grid having at least one malfunctioning and/or disabled asset from the plurality of assets.

Preferably, the at least one task comprises determining a power flow of the electrical power grid, more preferably the electrical power grid having at least one malfunctioning and/or disabled asset from the plurality of assets.

Preferably, the method comprises pre-processing the data associated with the electrical grid model and/or at least one asset comprised in the electric grid to define the electrical grid model.

Preferably, the at least one task comprises determining that the determined at least one parameter meets at least one constraint, more preferably a voltage constraint, a current constraint, and/or a power constraint, of the electrical power grid.

Preferably, the at least one further task is a subsequent iteration following the at least one task.

Preferably, the data comprises information associated with the electrical power grid in response to determining that the determined at least one parameter fails to meet the at least one constraint, more preferably a voltage constraint, a current constraint, and/or a power constraint, of the electrical power grid.

Preferably, the physical system is an electrical power grid comprising a plurality of assets.

Preferably, the obtained data comprises at least one of at least one initial condition of the power grid, and at least one constraint, more preferably a voltage constraint, a current constraint, and/or a power constraint, of the power grid, a power demand and/or generation in the power grid, a state of the electrical power grid, and a state of the plurality of assets.

The present disclosure also relates to a control system for controlling a physical system, the control system comprising a storage medium and at least one execution module, the at least one execution module comprising: a transceiver module being configured to: obtain, from the storage medium, a model representing the physical system, and data related to the physical system, wherein the data is represented using a tree structure comprising at least one parent node and at least one child node associated with the at least one parent node; and a processor being configured to: perform at least one task based on the obtained model and data; generate instructions for: storing, in the at least one child node, at least one deviation obtained by performing at least one task based on the obtained model and data, wherein the at least one deviation stored in the at least one child node is a deviation in information from data stored in the at least one parent node; storing a respective identifier assigned to the at least one deviation; and perform at least one further task in response to determining that input data, required to perform the at least one further task, indicated by the respective identifier is available.

Preferably, the control system further comprises a controlling module being configured to control the physical system based on further data obtained by performing the at least one further task.

Preferably, the control system further comprises a controlling module being configured to control an electrical power grid comprising a plurality of assets based on further data obtained by performing the at least one further task.

Preferably, the control system further comprises a controlling module being configured to control a power flow in an electrical power grid comprising a plurality of assets based on further data obtained by performing the at least one further task.

Preferably, the control system further comprises a storage medium being configured to: store the model representing the physical system, the data related to the physical system, the at least one deviation, and the respective identifier.

Preferably, the at least one task comprises a plurality of tasks.

Preferably, the at least one task is a plurality of tasks.

Preferably, the at least one further task comprises a plurality of further tasks.

Preferably, the control system comprises a scheduling module being configured to: schedule the plurality of tasks based on the pre-assigned respective identifier indicating unavailable input data of the input data.

Preferably, the control system comprises a scheduling module being configured to: schedule the plurality of tasks based on at least one further task of the plurality of tasks requiring unavailable input data of the input data.

Preferably, the scheduling module is configured to pre-assign a storage space in the storage medium for the input data, preferably prior to completing the at least one task.

Preferably, the scheduling module is configured to pre-assign the respective identifier for the input data, preferably prior to completing the at least one task.

Preferably, the at least one execution module further comprises a local storage medium being configured to: store the obtained model; and retain the stored model after performing the at least one task.

Preferably, the obtained model is stored at the local storage medium of the execution module.

Preferably, the stored model remains stored at the local storage medium of the execution module after performing the at least one task.

Preferably, the obtained model is unchangeable, more preferably by the at least one task and/or the at least one further task.

Preferably, the stored at least one deviation is unchangeable, more preferably by the at least one task and/or the at least one further task.

Preferably, the physical system is an electrical power grid comprising a plurality of assets.

Preferably, the at least one task comprises determining at least one parameter associated with the electrical power grid, more preferably the electrical power grid having at least one malfunctioning and/or disabled asset from the plurality of assets.

Preferably, the at least one parameter comprises or is a state estimation of the electrical power grid, more preferably the electrical power grid having at least one malfunctioning and/or disabled asset from the plurality of assets.

Preferably, the at least one task comprises determining a security assessment of the electrical power grid, more preferably the electrical power grid having at least one malfunctioning and/or disabled asset from the plurality of assets.

Preferably, the at least one task comprises a dispatch optimal power flow of the electrical power grid, more preferably the electrical power grid having at least one malfunctioning and/or disabled asset from the plurality of assets.

Preferably, the at least one task comprises determining a security constrained power flow of the electrical power grid, more preferably the electrical power grid having at least one malfunctioning and/or disabled asset from the plurality of assets.

Preferably, the at least one task comprises determining a unit commitment the electrical power grid, more preferably the electrical power grid having at least one malfunctioning and/or disabled asset from the plurality of assets.

Preferably, the at least one task comprises determining a power flow of the electrical power grid, more preferably the electrical power grid having at least one malfunctioning and/or disabled asset from the plurality of assets.

Preferably, the control system is configured to pre-process the data associated with the electrical grid model and/or at least one asset comprised in the electric grid to define the electrical grid model.

Preferably, the at least one task comprises determining that the determined at least one parameter meets at least one constraint, more preferably a voltage constraint, a current constraint, and/or a power constraint, of the electrical power grid.

Preferably, the at least one further task is a subsequent iteration following the at least one task.

Preferably, the data comprises information associated with the electrical power grid in response to determining that the determined at least one parameter fails to meet the at least one constraint, more preferably a voltage constraint, a current constraint, and/or a power constraint, of the electrical power grid.

Preferably, the physical system is an electrical power grid comprising a plurality of assets.

Preferably, the obtained data comprises at least one of at least one initial condition of the power grid, and at least one constraint, more preferably a voltage constraint, a current constraint, and/or a power constraint, of the power grid, a power demand and/or generation in the power grid, a state of the electrical power grid, and a state of the plurality of assets.

Preferably, the scheduling module comprises a processor being configured to perform any one of the methods described herein.

Preferably, the scheduling module comprises a transceiver being configured to communicate with other modules according to any one of the methods described herein.

Preferably, the storage medium comprises a processor being configured to perform any one of the methods described herein.

Preferably, the storage medium comprises a transceiver being configured to communicate with other modules according to any one of the methods described herein.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

### Description of the Drawings

FIG. 1 illustrates a flow chart of a method for controlling a physical system according to an embodiment of the present disclosure.
FIG. 2 illustrates an overview of a control system according to an embodiment of the present disclosure.
FIG. 3 illustrates a detailed view of the control system according to an embodiment of the present disclosure.

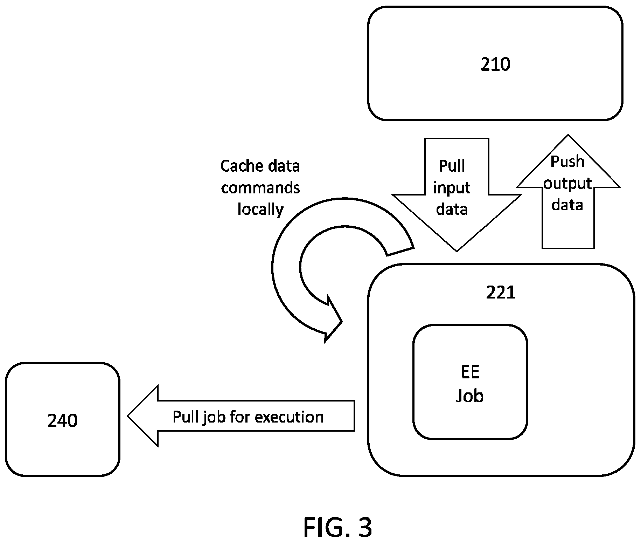

FIG. 3 illustrates a detailed view of the control system according to an embodiment of the present disclosure.

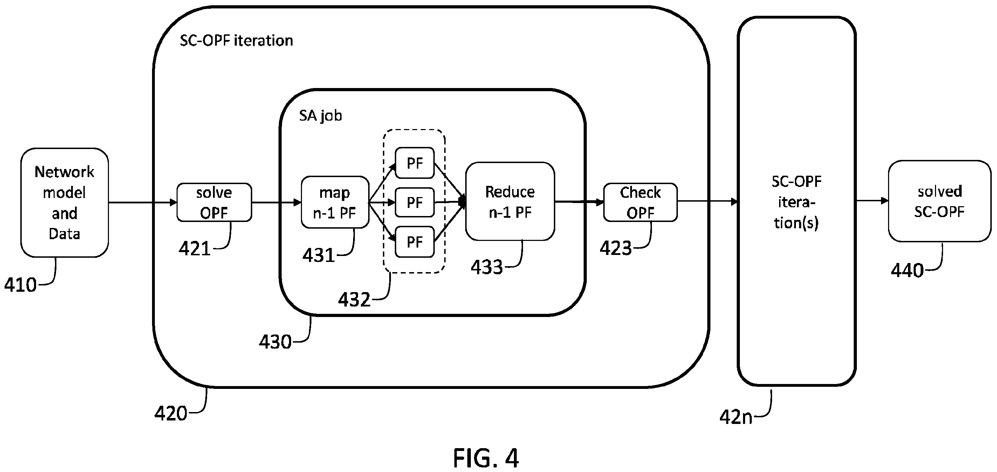

FIG. 4 illustrates a flow chart of the method according to an embodiment of the present disclosure.

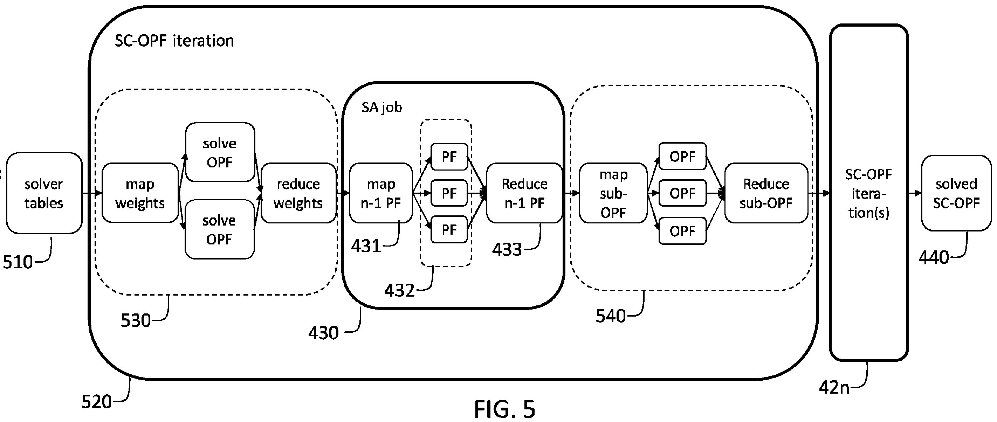

FIG. 5 illustrates a flow chart of the method according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

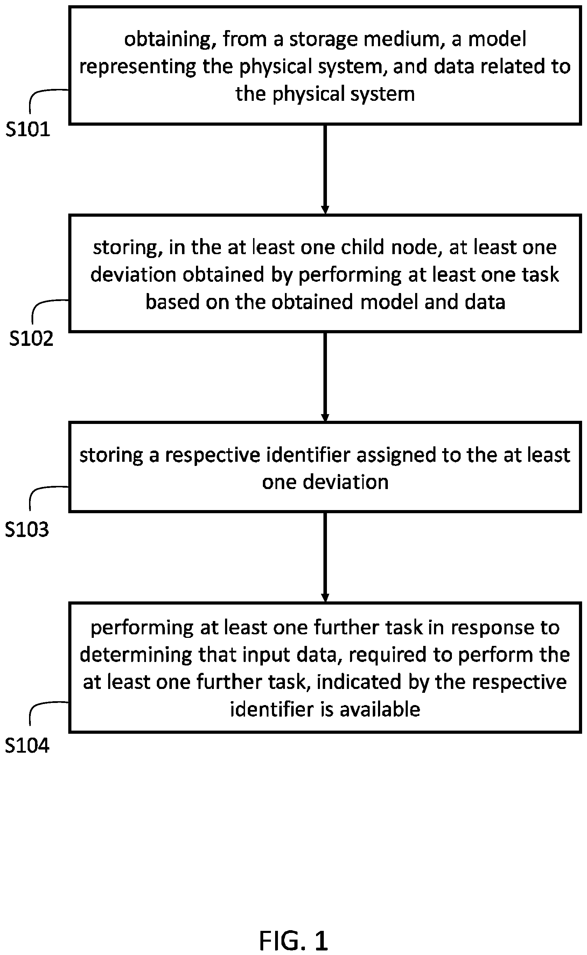

FIG. 1 illustrates a flow chart of a method for controlling a physical system. At S101, a model representing the physical system, and data related to the physical system are obtained from a storage medium. The data is represented using a tree structure comprising at least one parent node and at least one child node associated with the at least one parent node. At S102, at least one deviation obtained by performing at least one task based on the obtained model and data is stored, in the at least one child node. The at least one deviation stored in the at least one child node is a deviation in information from data stored in the at least one parent node. At S103, a respective identifier assigned to the at least one deviation is stored. At S104, at least one further task is performed in response to determining that input data, required to perform the at least one further task, indicated by the respective identifier is available.

Herein, the obtaining may comprise receiving, determining, computing, and etc.

In an embodiment, the method further comprises controlling the physical system based on further data obtained by performing the at least one further task.

In an embodiment, the method further comprises controlling an electrical power grid comprising a plurality of assets based on further data obtained by performing the at least one further task.

In an embodiment, the method further comprises controlling a power flow in an electrical power grid comprising a plurality of assets based on further data obtained by performing the at least one further task.

In an embodiment, the obtained model is unchangeable, more preferably by the at least one task and/or the at least one further task.

In an embodiment, the stored at least one deviation is unchangeable, more preferably by the at least one task and/or the at least one further task.

In an embodiment, the method further comprises pre-assigning a storage space in the storage medium for the input data, preferably prior to completing the at least one task.

In an embodiment, the method further comprises pre-assigning the respective identifier for the input data, preferably prior to completing the at least one task.

In an embodiment the at least one task comprises a plurality of tasks.

In an embodiment, the method further comprises scheduling the plurality of tasks based on the pre-assigned respective identifier indicating unavailable input data of the input data.

In an embodiment, the at least one further task is a plurality of further tasks.

In an embodiment, the method further comprises scheduling the plurality of tasks based on at least one further task of the plurality of tasks requiring unavailable input data of the input data.

In an embodiment, the obtained model is stored at a local storage medium of an execution module.

In an embodiment, the stored model remains stored at the local storage medium of the execution module after performing the at least one task.

In an embodiment, the physical system is an electrical power grid comprising a plurality of assets.

In an embodiment, the at least one task comprises determining at least one parameter associated with the electrical power grid, more preferably the electrical power grid having at least one malfunctioning and/or disabled asset from the plurality of assets.

In an embodiment, the at least one parameter comprises or is a state estimation of the electrical power grid, more preferably the electrical power grid having at least one malfunctioning and/or disabled asset from the plurality of assets.

In an embodiment, the at least one task comprises determining a security assessment of the electrical power grid, more preferably the electrical power grid having at least one malfunctioning and/or disabled asset from the plurality of assets.

In an embodiment, the at least one task comprises a dispatch optimal power flow of the electrical power grid, more preferably the electrical power grid having at least one malfunctioning and/or disabled asset from the plurality of assets.

In an embodiment, the at least one task comprises determining a security constrained power flow of the electrical power grid, more preferably the electrical power grid having at least one malfunctioning and/or disabled asset from the plurality of assets.

In an embodiment, the at least one task comprises determining a unit commitment the electrical power grid, more preferably the electrical power grid having at least one malfunctioning and/or disabled asset from the plurality of assets.

In an embodiment, the at least one task comprises determining a power flow of the electrical power grid, more preferably the electrical power grid having at least one malfunctioning and/or disabled asset from the plurality of assets.

In an embodiment, the method comprises pre-processing the data associated with the electrical grid model and/or at least one asset comprised in the electric grid to define the electrical grid model.

In an embodiment, the at least one task comprises determining that the determined at least one parameter meets at least one constraint, preferably a voltage constraint, a current constraint, and/or a power constraint, of the electrical power grid.

In an embodiment, the at least one further task is a subsequent iteration following the at least one task.

In an embodiment, the data comprises information associated with the electrical power grid in response to determining that the determined at least one parameter fails to meet the at least one constraint, preferably a voltage constraint, a current constraint, and/or a power constraint, of the electrical power grid.

In an embodiment, the physical system is an electrical power grid comprising a plurality of assets.

In an embodiment, the obtained data comprises at least one of at least one initial condition of the power grid, and at least one constraint, preferably a voltage constraint, a current constraint, and/or a power constraint, of the power grid, a power demand and/or generation in the power grid, a state of the electrical power grid, and a state of the plurality of assets.

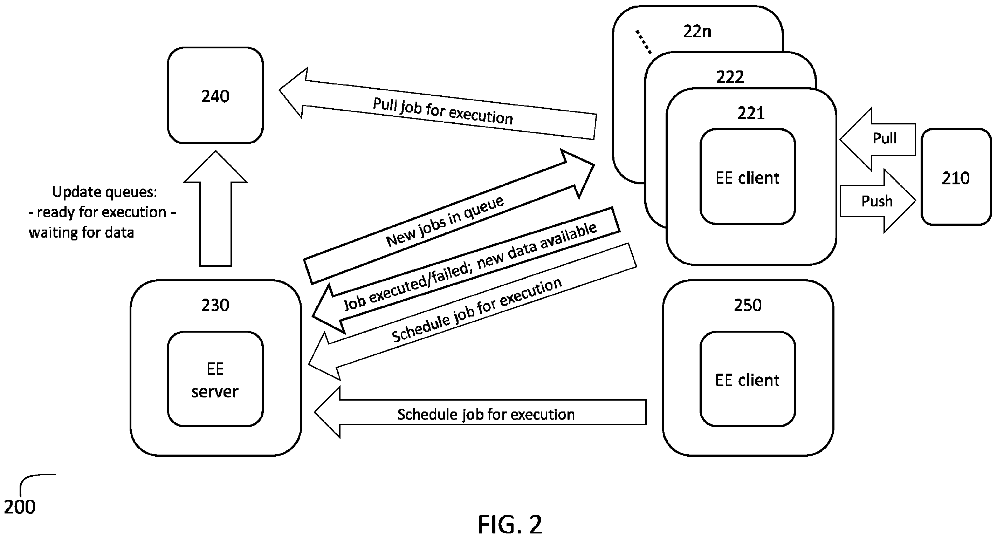

Fig. 2 illustrates an overview of a control system according to an embodiment of the present disclosure. In particular, the interactions among the modules comprised in the control system are described.

In the embodiment, the control system 200 comprises a storage medium 210 (herein also referred to as database), at least one execution module 221 to 22n (herein also referred to as worker), a scheduling module 230 (herein also referred to as execution engine), a redistribution module 240, and a dashboard module 250.

### Database 210

A database 210 stores an initial model representing a physical system to be controlled, e.g., the physical system being an electrical power grid, and data related to the physical system. Further the database 220 stores any changes in the model and/or data as well as the associated respective universal unique identifier (UUID) assigned to each of the changes. The data may be represented using a tree structure comprising at least one parent node and at least one child node associated with the at least one parent node. The relationship between a parent node and a child node is at least one deviation in the data. That is, the data stored in the child node is a deviation in information from data stored in the at least one parent node. For instance, a power setpoint of the electrical power grid at an n^{th} layer of the tree may be a modified power setpoint with respect to the power setpoint stored in its parent node in the n-1^{th} layer. The data in a parent node is assigned a first UUID and the data in its parent node is assigned a second UUID which is different from the first UUID. This way, incremental changes with respect to the already existing data can be stored and said incremental changes can be accessed using the assigned respective UUIDs. Such deviation may be stored as a set of instructions, e.g., using a Create, Read, Update, and Delete (CRUD) commands (see for instance FIG. 3). This allows to chain data updates, resulting in a list of commands to be applied on data, where each command output have an UUID assigned giving version history. As a result, the database 210 stores an initial model and/or data, and the chain of changes indicated by the respective UUID.

In an embodiment, the data objects stored in the database 210 are immutable or unchangeable. In particular, when the UUID is assigned, the underlying data cannot be changed. This allows a yield of the same data throughout the process described when the data indicated by said UUID are referred, which in turn enables distributing the data over a set of computing means using a shared database. In an embodiment, the stored data indicated by the respective UUID are unchangeable by and/orwhile performing any one of the tasks and/or instructions related to determining at least one parameter used to control the physical system. In an embodiment, the stored data indicated by the respective UUID are changeable with a specific instruction.

The database 210 can be realized by the following non-limiting Open-Source-Software (OSS) options:
- Redis may allow for direct storing key value pairs is a perfect fit for this use case, especially when the data does not require any changes.
- SQL database may be implemented, as the network model data are in a form of database tables. Each immutable state or incremental change can be stored as a separate database.
- Document database such as MongoDB, as each data under UUID can be stored as a separate document.

In an embodiment, the database 210 comprises a transceiver being configured to communicate bidirectionally with another module, e.g., an execution module. In an embodiment, the database 210 transmits any information stored in the database 210 to another module and/or receives any information to be stored in the database 210.

Workers 221 to 22n (the 1^{st} worker 221 to the n^{th} worker 22n)

A worker 221 to 22n comprises a processing means being configured to perform the methods described herein, a transceiver being configured to communicate with other modules according to the methods described herein, and a local cache being configured to store data according to the methods described herein. The following illustrates non-limiting embodiments of the methods performed by a worker 221 to 22n.

In an embodiment, each job is executed by a single worker, and each job consumes set of data resulting in one or more datasets. The worker 221 to 22n pulls, from the data base 210, the initial model representing a physical system, e.g., an electrical power grid comprising a plurality of assets, and the data related thereto. The worker 221 to 22n stores, in the local cache, the pulled initial model and the data related thereto. Then, the worker 221 to 22n pulls, from the scheduling module 230, at least one job which is ready for execution. Herein, a job may be an instruction or a set of instructions. The worker 221 to 22n performs the pulled at least one job based on the cached initial model and the data related thereto. The difference between the output and input of the performed at least one job is stored, in the data base 210, along with the UUID assigned to the stored difference. The difference may also be stored in the local cache. The difference may be stored in the form of an instruction or a set of instructions, e.g., CRUD instructions. Such stored difference may be different from the performed at least one job. For instance, the stored difference may be a difference in the model, which is stored as instructions to modify the data of a referring model. The local cache may retain the stored model, in particular the initial model, after performing the at least one job. The local cache may also store and retain any command, e.g., CRUD commands (cf. FIG. 3). When the worker 221 to 22n determines that a job requires a specific data identified by a UUID, the worker 221 to 22n checks whether said specific data is stored in the local cache. In determining that said specific data is not stored or missing in the local cache, the worker 221 to 22n pulls said specific data, from the data base 210, preferably only once.

For the mentioned calculations each job will execute a calculation on a slightly altered base case, e.g., the model and/or data related thereto used to execute a calculation may differ from the initial model and/or data related thereto. Thus, when the initial model is stored in the local cache, only incremental changes needs to pulled from the database for each job. A job description can define an input as a set of incremental change stored by a UUID. The change itself is pulled from the database, but the largest dataset (the initial model data) is be pulled just once.

The worker 221 to 22n communicates with the scheduling module 230. The communication comprises transmitting, from the worker 221 to 22n to the scheduling module 230, an indication whether the pulled at least one job is executed or failed, an optionally whether a new data is available; and/or an indication for scheduling another job for an execution. For instance, the worker 221 to 22n may determine that a further iteration is required to obtain the desired data, e.g., an optimal power output which meet all the requirements under the security constraints for every scenario (i.e., SC-OPF). In such case, the worker 221 to 22n may transmit an indication to the scheduling module 230 that further jobs need to be executed, i.e., schedule another job to be executed.

In an embodiment, the execution module 221 to 22n comprises: a transceiver module being configured to: obtain, from the storage medium 210, a model representing the physical system, and data related to the physical system, wherein the data is represented using a tree structure comprising at least one parent node and at least one child node associated with the at least one parent node; and a processor being configured to: perform at least one task based on the obtained model and data; generate instructions for: storing, in the at least one child node, at least one deviation obtained by performing at least one task based on the obtained model and data, wherein the at least one deviation stored in the at least one child node is a deviation in information from data stored in the at least one parent node; storing a respective identifier assigned to the at least one deviation; and perform at least one further task in response to determining that input data, required to perform the at least one further task, indicated by the respective identifier is available. In an embodiment, a worker instance comprises a local data cache or a local storage medium being configured to: store the obtained model; and retain the stored model after performing the at least one task.

In the case that a job requires specific data identified by UUID, the worker will check if the data point is not yet in the local cache and pull it only once. For the mentioned calculations each job will execute a calculation on a slightly altered base case, therefore for each job, only an incremental change will need to be pulled from the database. A job description can define an input as a set of incremental change stored by a UUID. The change itself will be pulled from the database, but the largest dataset (the initial model data) will be pulled just once.

In an embodiment, the execution module 221 to 22n comprises: a transceiver module being configured to: obtain, from the storage medium, a model representing the physical system, and data related to the physical system, wherein the data is represented using a tree structure comprising at least one parent node and at least one child node associated with the at least one parent node; and a processor being configured to: perform at least one task based on the obtained model and data; generate instructions for: storing, in the at least one child node, at least one deviation obtained by performing at least one task based on the obtained model and data, wherein the at least one deviation stored in the at least one child node is a deviation in information from data stored in the at least one parent node; storing a respective identifier assigned to the at least one deviation; and perform at least one further task in response to determining that input data, required to perform the at least one further task, indicated by the respective identifier is available

In an embodiment, the at least one execution module further comprises a local storage medium being configured to: store the obtained model; and retain the stored model after performing the at least one task.

In an embodiment, the obtained model is stored at the local storage medium of the execution module.

In an embodiment, the stored model remains stored at the local storage medium of the execution module after performing the at least one task.

In an embodiment, the obtained model is unchangeable, more preferably by the at least one task and/or the at least one further task.

In an embodiment, the stored at least one deviation is unchangeable, more preferably by the at least one task and/or the at least one further task.

### Execution engine 230

An execution engine 230 comprises a transceiver being configured to communicate with other modules according to the methods described herein, and a processing module being configured to perform the methods described herein. The following illustrates non-limiting embodiments of the methods performed by the execution engine 230.

The execution engine 230 receives and accepts jobs to be executed, i.e., obtains an indication, from the worker 221 to 22n, that a job is to be executed. The execution engine schedules the jobs based on the availability of the data indicated by the respective UUID in the database 210. For instance, a job is scheduled as ready for execution when all input data identified by the respective UUID is present in the database. The execution engine 230 may pre-assign an UUID for the output of a job, preferably before said job is complete, and more preferably before the execution of said job is started. This pre-assigned UUID may be used as a trigger to run a job. For instance, the pre-assigned UUID may be monitored and used to determine whether a further job needs to be executed based on the availability of the data indicated by the pre-assigned UUID. A job executing a single iteration of the SC-OPF can either return the solution and store it under the pre-assigned data UUID, or schedule one more iteration. This allows pre-assigning the output data UUID for the whole pipeline and decide during the execution whenever the actual data are to be stored as the output, or further jobs or iterations are to be executed to refine solution. Such dynamic scheduling solves, among others, the challenges posed by scheduling the jobs when the number of iterations required to arrive at the desired solution is unknown before the execution.

The workers 221 to 22n communicate with the execution engine 230 with the capability of scheduling additional jobs. This allows for a natural hierarchical execution of jobs as the top general job is to schedule the whole task, where all output UUID's are assigned before jobs are executed. Each job can then schedule sub-jobs to execute calculations.

An example of the SA is to have three sub-jobs: map, determine the PF, and reduce. The SA mapping prepares incremental changes of removing a line or generators. Each change is stored as a separate UUID, then for each prepared UUID a power flow job is executed. The SA reduce job waits until all output UUIDs are present in the database 210. The role of the execution engine 230 is to keep track of new data UUID in the database, to mark a job as ready for execution in case of all input data UUIDs are available.

For efficient tracking which job is waiting for data the execution engine 230 may schedule the jobs based on two balanced trees of sets:
- For each job, a set of missing UUIDs; and
- For each UUID, a set of waiting jobs.

The first tree, i.e., for each job, a set of missing UUIDs, monitors the data indicated by the UUIDs required to perform the respective job. A parent node of the first tree may be a UUID indicating required input of the respective job, and the children nodes may be the UUID indicating the required data to obtain said required input of the respective job.

The second tree, i.e., for each UUID, a set of waiting jobs, monitors the jobs to be performed which require, either directly or indirectly, the data indicated by the respective UUID.

This ensures fast resolution with the complexity of O(ln(n)) for scheduling job for execution in case that the execution engine is informed about new data UUID availability in the database.

The execution engine 230 may have a serial access to the list of jobs available to be executed. Thus, the list itself can be realized either as an integral part of an execution engine 230 or a dedicated database, which ensure a sequential resolution of each worker job fetch request.

### Redistribution module 240

The redistribution module 240 is configured to redistribute the jobs. The redistribution module 240 holds queues of jobs to be executed, pulls job for execution from the workers, and receives updates from the execution engine. The updates include an indicate for updating the queues. The redistribution module 240 sort the queues based on the received updates. The updates include updating the queues for jobs which are ready for execution and jobs which are waiting for data.

### Dashboard module 250

The dash board module 250 schedules job for execution and transmits the scheduled jobs to the scheduling module 230, or sends an indication to schedule job for execution to the scheduling module 230.

In an embodiment, the scheduling module 230 comprises the redistribution module 240 and/or the dashboard module 250. In an embodiment, the scheduling module is configured to perform the methods of the redistribution module 240 and/or the dashboard module 250.

In an embodiment, the scheduling module is configured to pre-assign a storage space in the storage medium for the input data, preferably prior to completing the at least one task.

In an embodiment, the scheduling module is configured to pre-assign the respective identifier for the input data, preferably prior to completing the at least one task.

In an embodiment, the control system 200 further comprises a controlling module being configured to control the physical system based on further data obtained by performing the at least one further task.

In an embodiment, the control system 200 further comprises a controlling module being configured to control an electrical power grid comprising a plurality of assets based on further data obtained by performing the at least one further task.

In an embodiment, the control system 200 further comprises a controlling module being configured to control a power flow in an electrical power grid comprising a plurality of assets based on further data obtained by performing the at least one further task.

In an embodiment, the control system 200 further comprises a storage medium being configured to: store the model representing the physical system, the data related to the physical system, the at least one deviation, and the respective identifier.

In an embodiment, the at least one task comprises a plurality of tasks.

In an embodiment, the at least one task is a plurality of tasks.

In an embodiment, the at least one further task comprises a plurality of further tasks.

In an embodiment, the control system 200 comprises a scheduling module being configured to: schedule the plurality of tasks based on the pre-assigned respective identifier indicating unavailable input data of the input data.

In an embodiment, the control system 200 comprises a scheduling module being configured to: schedule the plurality of tasks based on at least one further task of the plurality of tasks requiring unavailable input data of the input data.

In an embodiment, the physical system is an electrical power grid comprising a plurality of assets.

In an embodiment, the at least one task comprises determining at least one parameter associated with the electrical power grid, more preferably the electrical power grid having at least one malfunctioning and/or disabled asset from the plurality of assets.

In an embodiment, the at least one parameter comprises or is a state estimation of the electrical power grid, more preferably the electrical power grid having at least one malfunctioning and/or disabled asset from the plurality of assets.

In an embodiment, the at least one task comprises determining a security assessment of the electrical power grid, more preferably the electrical power grid having at least one malfunctioning and/or disabled asset from the plurality of assets.

In an embodiment, the at least one task comprises a dispatch optimal power flow of the electrical power grid, more preferably the electrical power grid having at least one malfunctioning and/or disabled asset from the plurality of assets.

In an embodiment, the at least one task comprises determining a security constrained power flow of the electrical power grid, more preferably the electrical power grid having at least one malfunctioning and/or disabled asset from the plurality of assets.

In an embodiment, the at least one task comprises determining a unit commitment the electrical power grid, more preferably the electrical power grid having at least one malfunctioning and/or disabled asset from the plurality of assets.

In an embodiment, the at least one task comprises determining a power flow of the electrical power grid, more preferably the electrical power grid having at least one malfunctioning and/or disabled asset from the plurality of assets.

In an embodiment, the method comprises pre-processing the data associated with the electrical grid model and/or at least one asset comprised in the electric grid to define the electrical grid model.

In an embodiment, the at least one task comprises determining that the determined at least one parameter meets at least one constraint, preferably a voltage constraint, a current constraint, and/or a power constraint, of the electrical power grid.

In an embodiment, the at least one further task is a subsequent iteration following the at least one task.

In an embodiment, the data comprises information associated with the electrical power grid in response to determining that the determined at least one parameter fails to meet the at least one constraint, preferably a voltage constraint, a current constraint, and/or a power constraint, of the electrical power grid.

In an embodiment, the physical system is an electrical power grid comprising a plurality of assets.

In an embodiment, the obtained data comprises at least one of at least one initial condition of the power grid, and at least one constraint, preferably a voltage constraint, a current constraint, and/or a power constraint, of the power grid, a power demand and/or generation in the power grid, a state of the electrical power grid, and a state of the plurality of assets.

The control system 200 of FIG. 2 offers, among others, a scalability of computational operations in a physical system through the distribution of calculations over multiple computing means or a cluster. The local caching of the initial model and a dynamic job execution triggers jobs upon availability of immutable data commands. These commands either creates or updates existing data in an incremental fashion, always resulting in assigning a respective UUID to the data command output. This allow, among others, preassigning the output data UUID for the whole pipeline and decide during the execution whenever the actual data are to be stored as the output, or an further jobs or iterations are to be executed to refine solution. Such pre-assigning mechanism allows splitting of a calculation pipeline into smaller nested jobs to be executed. The execution engine checking if all jobs have the necessary data UUID's in the database allows for a natural hierarchical and correct order of job scheduling and execution.

FIG. 3 illustrates a detailed view of the control system according to an embodiment of the present disclosure.

Only the first worker 221 is presented for simplicity, but the methods described in FIG. 3 is applicable any one of the workers 221 to 22n. The first worker 221 pulls, from the data base 210, the input data required to perform a job, e.g., the initial model representing an electrical power grid comprising a plurality of assets and the data related thereto. The first worker 221 also pushes, to the data base 210, the output data obtained by performing a job. The first worker 221 comprising a local cache may store any deviation between the output and input of a job as a set of instructions, e.g., using CRUD commands. The following illustrates a non-limiting embodiment of the CRUD commands.
- Create: Create tree of DataFrames parent for other commands
- Update: Update existing values in tree of DataFrames.
- Delete: Remove rows from existing DataFrames.

This way, the incremental changes of between two consecutive stages of the data and/or model are stored, resulting in a chain of CRUD commands build data. A worker 221 pulls each data command only once. In an embodiment, the structure of the base data is a tree of DataFrames. In an embodiment, the jobs have inputs and outputs list of data UUID. In an embodiment, the job is ready for execution if all input data are ready in the database.

FIG. 4 illustrates a flow chart of the method according to an embodiment of the present disclosure. In particular, FIG. 4 illustrates a non-limiting embodiment for performing the SC-OPF using the system of FIG. 2. At SC-OPF iteration job 420, the data is required, e.g., the respective UUID of the stored data, a network model of the grid, initial conditions, actual constraints, and the list of exceeded limits for each considered n-1 scenarios. The SC-OPF iteration job 420 comprises sub-jobs: solving the OPF 421, performing the SA 430, and checking the OPF 423 to end the job. At solve OPF 421, the optimization solver is run to solve the OPF problem considering currently exceeded limits. At SA job 430, 3 sub-jobs are performed, namely, map n-1 PF job 431, a plurality of PF jobs 432, and reduce n-1 PF job 433. Map 431 and reduce 433 jobs, respectively, schedules the set of PF jobs to be executed, and aggregate results of each job in a form acceptable to OPF iteration job. At check OPF 423, it is determined whether the SA limits are within the thresholds. If there is no exceeded limit, i.e., in response to determining that the SA limits are within the threshold, the solution can be stored in the pre-assigned UUID for the SC-OPF output. Otherwise, the next OPF iteration job 42n is scheduled to consider the exceeded limits. The number of iterations required to arrive at the desired output, i.e., solved SC-OPF, is unknown, thus "n" number of times are executed, herein n is a natural number.

Still in reference to FIG. 4, a natural hierarchy is observed as the SC-OPF iteration pre-assigns the output UUID, then execute all sub-jobs. At check OPF job 423, it is decided to either return or do one more SC-OPF iteration job. Scheduling SA job 430 will result in scheduling sub-jobs, where the output of SA job 430 is passed to reduce n-1 PF job 433. This causes the "Check OPF" job 423 to wait until reduce n-1 PF job 433 returns the data to the pre-assigned UUID. The passing of the pre-assigned UUID for the resulting job output data ensures, for any level of nested jobs, a correct execution order and the capability to schedule jobs on the fly, i.e., while performing the jobs.

FIG. 5 illustrates a flow chart of the method according to an embodiment of the present disclosure. The steps 430, 42n, and 440 in FIG. 5 follow those of FIG. 4, thereby the description thereof is omitted here for conciseness. At solver tables 510, the data ID is assigned for solved SC-OPF. The SC-OPF iteration 520 comprises steps 530, 430, and 540, and is performed based on the solver tables 510. At step 530, different weights are checked in parallel, the OPF are solved by the workers in parallel, the solved OPFs are aggregated, and the weights are reduced. At 540, Bender's sub-jobs are scheduled to keep crossed limits by mapping sub-OPF, solving the OPFs in parallel, aggregating the OPFs, and reducing the sub-OPF.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for controlling a physical system, the method comprising:
obtaining, from a storage medium, a model representing the physical system, and data related to the physical system,
wherein the data is represented using a tree structure comprising at least one parent node and at least one child node associated with the at least one parent node;
storing, in the at least one child node, at least one deviation obtained by performing at least one task based on the obtained model and data,
wherein the at least one deviation stored in the at least one child node is a deviation in information from data stored in the at least one parent node;
storing a respective identifier assigned to the at least one deviation; and
performing at least one further task in response to determining that input data, required to perform the at least one further task, indicated by the respective identifier is available.

2. The method of claim 1, further comprising controlling the physical system, preferably controlling an electrical power grid comprising a plurality of assets, more preferably controlling a power flow in an electrical power grid comprising a plurality of assets, based on further data obtained by performing the at least one further task.

3. The method of claim 1 or 2, wherein:
the obtained model is unchangeable, preferably by the at least one task and/or the at least one further task, and/or
the stored at least one deviation is unchangeable, preferably by the at least one task and/or the at least one further task.

4. The method of any one of the preceding claims, the method further comprising:
pre-assigning a storage space in the storage medium for the input data, preferably prior to completing the at least one task, and/or
pre-assigning the respective identifier for the input data, preferably prior to completing the at least one task.

5. The method of claim 4, wherein the at least one task comprises a plurality of tasks, and the method further comprising:
scheduling the plurality of tasks based on the pre-assigned respective identifier indicating unavailable input data of the input data.

6. The method of claim 4 or 5, wherein the at least one task is a plurality of tasks, wherein the at least one further task is a plurality of further tasks, and the method further comprising:
scheduling the plurality of tasks based on at least one further task of the plurality of tasks requiring unavailable input data of the input data.

7. The method of any one of the preceding claims, wherein the obtained model is stored at a local storage medium of an execution module, and wherein the stored model remains stored at the local storage medium of the execution module after performing the at least one task.

8. The method of any one of the preceding claims, wherein:
the physical system is an electrical power grid comprising a plurality of assets, and
the at least one task comprises:
determining at least one parameter associated with, preferably wherein the at least one parameter comprises or is a state estimation, a security assessment, a dispatch optimal power flow, a security constrained power flow, a unit commitment, and/or a power flow of the electrical power grid having at least one malfunctioning and/or disabled asset from the plurality of assets; and
determining that the determined at least one parameter meets at least one constraint, preferably a voltage constraint, a current constraint, and/or a power constraint, of the electrical power grid.

9. The method of claim 8, wherein:
the at least one further task is a subsequent iteration following the at least one task, and
the data comprises information associated with the electrical power grid in response to determining that the determined at least one parameter fails to meet the at least one constraint, preferably a voltage constraint, a current constraint, and/or a power constraint, of the electrical power grid.

10. The method of any one of the preceding claims, wherein:
the physical system is an electrical power grid comprising a plurality of assets, and
the obtained data comprises at least one of at least one initial condition of the power grid, and at least one constraint, preferably a voltage constraint, a current constraint, and/or a power constraint, of the power grid, a power demand and/or generation in the power grid, a state of the electrical power grid, and a state of the plurality of assets.

11. A control system for controlling a physical system, the control system comprising at least one execution module, the at least one execution module comprising:
a transceiver module being configured to:
obtain, from a storage medium, a model representing the physical system, and data related to the physical system,
wherein the data is represented using a tree structure comprising at least one parent node and at least one child node associated with the at least one parent node;
and
a processor being configured to:
perform at least one task based on the obtained model and data;
generate instructions for:
storing, in the at least one child node, at least one deviation obtained by performing at least one task based on the obtained model and data,
wherein the at least one deviation stored in the at least one child node is a deviation in information from data stored in the at least one parent node;
storing a respective identifier assigned to the at least one deviation; and
perform at least one further task in response to determining that input data, required to perform the at least one further task, indicated by the respective identifier is available.

12. The control system of claim 11, further comprising a controlling module being configured to:
control the physical system, preferably control an electrical power grid comprising a plurality of assets, more preferably control a power flow in an electrical power grid comprising a plurality of assets, based on further data obtained by performing the at least one further task.

13. The control system of claim 11, further comprising a storage medium being configured to:
store the model representing the physical system and the data related to the physical system, the at least one deviation, and the respective identifier.

14. The control system of any one of claims 11 to 13, wherein the at least one task comprises a plurality of tasks, wherein the at least one task is a plurality of tasks, wherein the at least one further task comprises a plurality of further tasks, and the control system comprising a scheduling module being configured to:
schedule the plurality of tasks based on the pre-assigned respective identifier indicating unavailable input data of the input data, and/or
schedule the plurality of tasks based on at least one further task of the plurality of tasks requiring unavailable input data of the input data.

15. The control system of any one of claims 11 to 14, wherein the at least one execution module further comprises a local storage medium being configured to:
store the obtained model; and
retain the stored model after performing the at least one task.
